# EUROPEAN PATENT SPECIFICATION

(11) **EP 0 965 485 B1**
(45) Date of publication and mention of the grant of the patent: **29.07.2009**
(21) Application number: 99304644.0
(22) Date of filing: 15.06.1999
(51) Int. Cl.: B60P 7/13, B60P 1/64

(54) **A locking device for a freight container**
Verriegelungsvorrichtung für Frachtcontainer
Dispositif de verrouillage pour conteneur de fret

(30) Priority: 19.06.1998 GB 9813325
(43) Date of publication of application: 22.12.1999
(73) Proprietor: Geest Nederland B.V., 2691 JD's Gravenzande (NL)
(72) Inventor: Strien, Cornelis G., 3415 PS Polsbroek (NL); Van Dijk, Jacob P., 3051 VR Rotterdam (NL)
(74) Representative: Bardo, Julian Eason

(56) References cited:
- EP-A- 0 330 300
- BE-A- 1 002 515
- US-A- 3 614 153
- US-A- 4 486 132
- US-A- 4 496 187

## Description

This invention relates to a trailer chassis including a locking device for locking a freight container on a chassis of a trailer.

Freight containers are conventionally of generally cuboidal shape and have corner fittings by means of which they can both be engaged by container handling apparatus when being loaded onto or unloaded from a ship or a wheeled vehicle, for example a road trailer or a railway wagon, and be held in position on such a ship or vehicle.

When being conveyed on a road trailer, a freight container is conventionally fastened to the chassis of the trailer by locking devices which are mounted on the chassis and engage the corner fittings at each of the bottom four corners of the container. Those corner fittings are themselves commonly of cuboidal shape having exterior end, side and bottom faces each of which is provided with an opening leading into a hollow interior of the fitting. The openings enable pins on the locking devices to be inserted into the corner fittings to fasten the container to the chassis.

In one common arrangement, the locking devices are positioned immediately below the four corners of the container and the pins on the locking devices project upwardly and into the openings on the bottom faces of the corner fittings. The "pins" have laterally projecting parts at their tops which in one orientation can be fitted through the openings in the corner fittings but can then be rotated about a vertical axis to another orientation in which those laterally projecting parts prevent separation of the pins and the corner fittings. Such a locking mechanism is commonly referred to as a "twist-lock".

At the front end of the trailer, there is a trailer-neck to the underside of which a kingpin is fitted. The kingpin is the only part of the trailer that projects below the plane of the underside of the trailer-neck (that being the same plane as the top plane of the fifth wheel of the tractor unit), so as to avoid interference with tractor assemblies or parts, in particular the wheels and wheelcovers, the tops of which are usually very close to the top plane of the fifth wheel of the tractor unit; such interference is especially a possibility when the tractor and trailer chassis combination is being driven along a curved path. Thus, it is important that the twist-locks at the front end of the trailer fit within the height of the trailer-neck. The height of the trailer-neck is one of three heights that have to be added together to give the overall height of the container and trailer chassis combination, the other two heights being the fifth wheel height (measured vertically from ground level) and the height of the freight container. The fifth wheel height is generally fixed within narrow limits by the size of standard tractor tyres and rims.

Standard freight containers are of various different heights but, especially when a relatively tall container is employed, the extra height that is required for the locking device/trailer-neck may not be acceptable. For example, it is not uncommon to have containers that are 9' 6" (2895 mm) high. In that case the height of the top of the container when placed on a chassis of a flat trailer is inevitably very close to, and in some cases beyond, the maximum height allowed by certain regulatory authorities. For example in Europe (excluding the United Kingdom and Ireland) the maximum height allowed is 4.0 m.

In order to address this problem of carrying a tall container and yet keep the top of the container at or below a required height, tall containers are commonly carried on a "gooseneck" trailer instead of a flat trailer. The principle of a gooseneck trailer arrangement is that a recess in the bottom of the container at its front end is provided to accommodate the trailer-neck (gooseneck). The trailer-neck is then accommodated within the height of the container and does not add to the overall height of the container and trailer chassis combination. A horizontal plane through the bottom faces of the corner fittings of the container is at substantially the same level as the top plane of the fifth wheel of the tractor unit. Conventional twist-locks cannot then be used, however, to secure the container to the trailer at its front end, because they would inevitably protrude below the top plane of the fifth wheel and therefore interfere with the wheels and wheelcovers of the tractor unit when connected to the trailer. In order to overcome this problem, locking devices at the front of the trailer chassis can be positioned immediately in front of the bottom of the container with locking pins that engage in the openings in the front faces of the corner fittings. The locking devices have pins which can be caused to move backwards and forwards along their longitudinal axes. Thus, after positioning a container on a trailer chassis the pins can be moved backwards so that they engage in the openings in the front end faces of the corner fittings at the bottom front of the container. At the rear of the chassis the same problem does not arise because the rear end of the container is usually well to the rear of the trailer wheels and the locking devices can therefore be provided at a low level without interfering with the wheels; those locking devices can therefore be twist-locked to the container in the manner described above.

The arrangement just referred to is workable in many situations but does have a disadvantage which we have found, especially in the case of a container that is 45 feet (13716 mm) in length. Such containers are the largest usually carried on roads in Europe, other common lengths of container being 20 feet (6058 mm) and 40 feet (12192 mm). When a container of length 45 feet (13716 mm) is carried on a trailer the extremities of the container are very close to the limits allowed by European road regulations. Indeed, if conventional corner fittings are used the extremities go beyond the limits for new containers. The problem arising from the corner fittings themselves can be solved by providing specially designed fittings that are the subject of International Patent Application No. PCT/GB97/03070. However, if at the front of the trailer chassis the locking devices referred to above and including moveable pins are provided, those locking devices are inevitably positioned forwardly of the front end of the container and, as a result, themselves cause the combination of trailer chassis and 45 foot (13716 mm) container to contravene the regulations. The other option of putting the locking devices below the front end of the container and twist-locking them to the container is unfortunately not acceptable because 45 foot (13716 mm) containers are often also 9' 6" (2895 mm) high and therefore the top of the container would become too high. Thus there is a need to provide a locking arrangement which is able to secure the front of a container to a trailer chassis without significantly increasing the height of the top of the container and without projecting forwardly from the container at its corner extremities.

US 3,614,153 representing the most relevant prior art, describes a trailer chassis which at its front end has a front bolster at the end of which fittings are mounted. The fittings carry locking pins which can be moved into engagement with corner fittings on the front of a container by moving nuts which have fingers projecting from them to enable them to be turned by hand. The nuts and fingers project forwards from the fittings on the ends of the bolster.

BE 1002515 also describes a trailer chassis with a front transverse bar which may carry locking devices at its ends for locking a freight container on the chassis.

US 4,486,132 describes a locking device for front end locking of a container. The device includes a lock bolt movable approximately parallel with the longitudinal axis of the chassis, between a locking and a release position. A pivotally mounted operating handle is provided for moving the lock bolt.

It is an object of the invention to provide a chassis of a trailer with a locking device for locking a freight container on the chassis, which locking device is capable of overcoming or mitigating the problems referred to above.

The present invention provides a chassis of a trailer, including a kingpin and a locking device for locking a 45 foot (13716mm) container to the chassis, the locking device being disposed at the front end of the chassis and including a pin for engaging in an opening in a front face of a corner fitting of the container and a locking member for locking the device in a locked position with the pin engaging in the opening in the front face of the corner fitting, characterised in that the locking device further comprises a mounting member and a carrier member the pin is mounted on the carrier member and the carrier member, is mounted on the mounting member, the carrier member being movable between a first position in which the pin engages in the opening of the corner fitting and a second position in which the pin is clear of the corner fitting, in that the locking member is slidably mounted on the carrier member for movement between a first position in which the carrier member is free to move relative to the mounting member and a second position in which the locking member engages in an aperture in the mounting member and the carrier member is locked in a fixed position, which is its first position, relative to the mounting member, in that the locking device is of generally elongate shape and the pin is disposed at one end of the device extending generally transverse to the longitudinal axis of the device when the carrier member.is in the first position, and in that when the carrier is in the first position, the locking device is disposed substantially entirely inside an arcuate surface extending around the vertical axis of pivoting of the kingpin at a radius of 2040mm from the axis.

By providing the locking pin on a movable carrier member it becomes possible to design a locking device which can be positioned forwardly of the front end of the container yet which, when the locking pin engages in an opening in a front face of the corner fitting of the container, does not project forwardly from the container at its extremities to any significant extent. An example of such a locking device is described below with reference to the drawings. In such an arrangement the locking device complies fully with certain European regulations.

Preferably the carrier member is pivotally movable about a vertical axis between the first position and the second position. Pivotal movement can readily be provided and, although that involves movement of the pin along an arcuate path, the range of movement and radius of curvature of the path may be such that the movement is close to linear movement.

The carrier member is preferably resiliently biased away from the first position towards the second position. In such a case, once the carrier member is freed from the first position by releasing the locking member, it may move automatically to its second position. Conveniently the resilient bias is provided by a leaf spring.

When viewed in a direction transverse to the longitudinal axis of the locking device and transverse to the longitudinal axis of the pin, the locking device is preferably thin, when measured in a direction along the longitudinal axis of the pin, at said one end. This thinness of the locking device is a particularly advantageous feature of the present invention because it makes it possible to provide a locking device which extends to only a very small extent in front of a container at the extremity of the container.

The chassis preferably further includes a bar arranged to extend transverse to the chassis, a respective carrier member and pin being provided at each of the opposite ends of the bar for engaging in respective openings of corner fittings at opposite sides of a container. The carrier member may be mounted directly on the bar but is preferably movably mounted on a mounting member which is in turn secured to the bar.

The carrier member is preferably arranged on the bar so that it can be positioned on the chassis in a laterally inner position or in a laterally outer position. Of course it is possible also for the carrier member to be positionable in further positions. By providing more than one position of the carrier member, the locking device can be made suitable for different kinds of container having different corner fittings.

The chassis may further include a container mounted on the chassis, the container including a corner fitting at a front bottom corner, the front fitting including an opening in an end face engaged by the locking pin when the carrier member is in the first position.

By way of example an embodiment of the invention will now be described with reference to the accompanying drawings, of which:
Fig. 1A is a schematic side view of a truck or tractor unit and a first form of trailer chassis carrying a container;
Fig. 1B is a schematic side view of a second form of trailer chassis carrying a container;
Fig. 1C is a schematic sectional view along the lines I-I of Fig. 1B of the second form of trailer chassis and container;
Fig. 2 is a schematic plan view of a front corner part of the container and part of the locking device at the front of the container, to provide an arrangement embodying the invention;
Fig. 3A is a plan view of a first part of the locking device;
Fig. 3B is a side view of the first part of the locking device;
Fig. 3C is an end view of the first part of the locking device;
Fig. 4A is a plan view of a second part of the locking device;
Fig. 4B is a side view of the second part of the locking device;
Fig. 4C is an end view of the second part of the locking device;
Fig. 5A is a plan view of a third part of the locking device; and
Fig. 5B is a side view of the third part of the locking device.

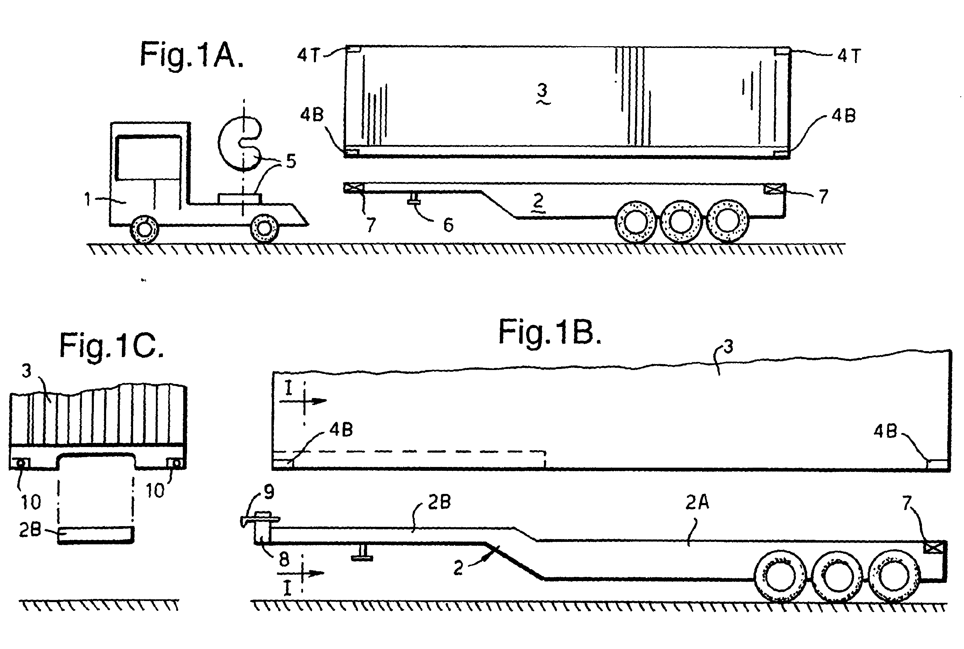

Fig. 1A shows schematically a conventional arrangement of truck 1, trailer 2 and container 3 in a case where the container is fastened to the chassis by respective twist-locks 7 below each of the corner fittings 4B at the four bottom corners of the container. Similar corner fittings 4T are provided at the four top corners of the container 3. The truck 1 has a fifth wheel 5 in which a kingpin 6 of the trailer 2 is received in a conventional manner. The arrangement shown in Fig. 1A is conventional.

Figs. 1B and 1C show a modified version of the arrangement of Fig. 1A in which corresponding parts are designated by the same reference numerals. In this case the trailer 2 is of the so-called gooseneck skeletal form having a rear portion 2A and a front portion 2B of reduced height. As shown in Figs. 1B and 1C the height of the container 3 on the trailer is reduced by lowering the rear portion 2A of the trailer and providing a recess 3A at the front of the container within which the front portion 2B of the trailer is received (the front portion 2B of the trailer being at the same height as in Fig. 1).

At the front end of the front portion 2B of the trailer a bar 8 extends across the full width of the trailer. The bar 8 is immediately in front of the front end of the container 3 when the container is properly placed on the trailer. A pair of securing pins 9 are mounted at respective ends of the bar 8 and are positioned so that they can be secured into openings 10 (Fig. 1C) in the front faces of the corner fittings 4B of the container. At the rear of the trailer the container 3 is secured by twist-locks 7 as in the case of the arrangement of Fig. 1A.

The arrangement shown in Figs. 1B and 1C is known.

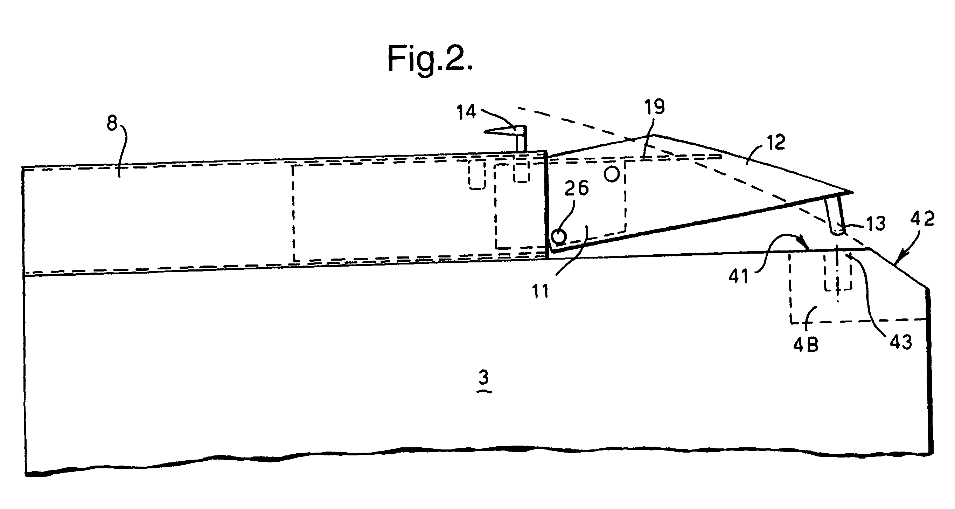

Fig. 2 shows a modification to the arrangement shown in Figs. 1B and 1C to provide an arrangement embodying the invention. The bar 8 and securing pins 10 are replaced by a locking device, part of which is shown in Fig. 2. The locking device comprises a central bar 8 on each end of which a mounting member 11 is fixed, each mounting member serving to mount a carrier member 12 and securing pin 13 for pivotal movement as will be described in more detail below. As will be understood, Fig. 2 shows the bar 8 and the mounting member 11, carrier member 12 and pin 13 that are at the right hand end (as seen in Fig. 2) of the bar; a similar mounting member 11, carrier member 12 and pin 13 are provided at the opposite end (left hand end as seen in Fig. 2) of the bar.

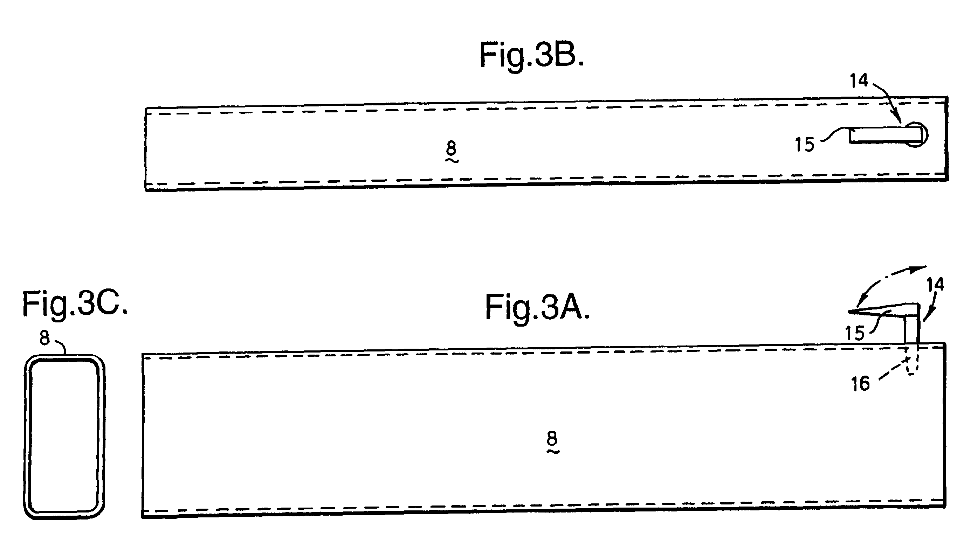

The bar 8 is shown in more detail in Figs. 3A to 3C. It will be seen that the bar is of rectangular tubular construction and carries at its right hand end (as seen in Fig. 3A) a locking pin mechanism 14 including a manually operable lever 15 and a locking pin 16 which is moveable by operation of the lever 15 from a locking position in which the pin 16 projects through the tubular wall of the bar 8 into the interior of the bar and an unlocked position in which the pin 16 is clear of the interior of the bar. Such locking pin mechanisms are known per se and the particular mechanism chosen is not significant to the present invention and will not be described further. It will be understood that another locking pin mechanism 14 (not shown) is provided at the left hand end (as seen in Fig. 3A) of the bar 8.

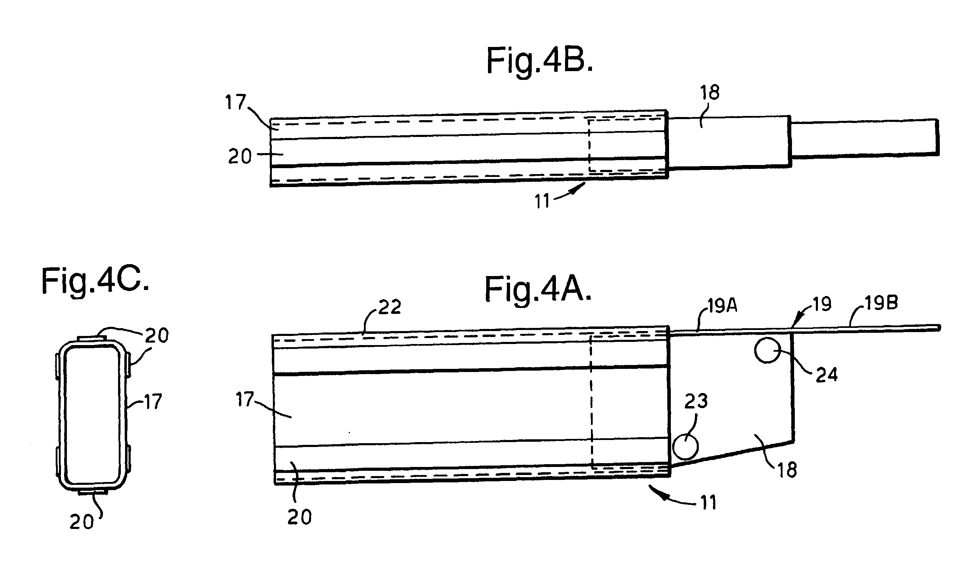

The mounting member 11 provided at the right hand end (as seen is Fig. 2) of the bar 8 is shown in Figs. 4A to 4C. The mounting member 11 is a composite member composed principally of three parts: a tubular member 17 which is dimensioned to fit inside the bar 8; a smaller tubular member 18 one end of which fits inside the member 17 and the other end of which projects from the member 17; and a leaf spring 19, one end 19A of which is fixed to the tubular member 18 and the other end 19B of which projects outwardly from the tubular member. The tubular member 17 carries around its exterior surface a total of six slide strips 20 which serve to mount the tubular member 17 slidably in the bar 8. The tubular member 17 has a pair of holes (not shown) in its side wall 22 for engagement by the locking pin 16; thus the member 17 can be secured in the bar 8 in the position shown in Fig. 2 or in a position which in this particular example is 84 mm further out (that is with the member 17 further to the right as seen in Fig. 2). The tubular member 18 is fixed to the member 17 and has two vertical through bores 23, 24 in the part of the member 18 that projects out from the member 17.

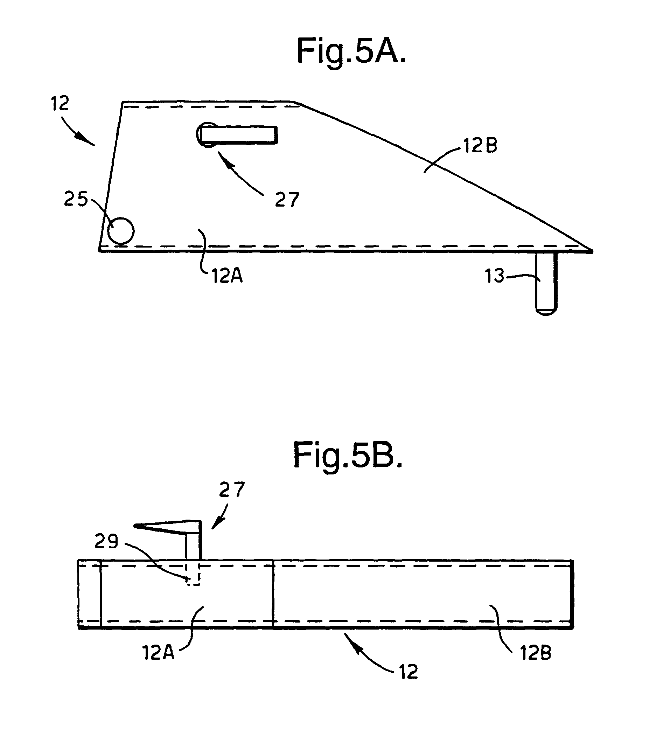

The carrier member 12 is shown in Figs. 5A and 5B and is of tubular construction. It is dimensioned to fit over the outwardly projecting part of the member 18. As seen in Fig. 5A an inner portion 12A of the carrier member is of constant width but an outer portion 12B steadily reduces in width to a pointed distal end at which the securing pin 13 is provided. The carrier member 12 has a through bore 25 which, when the carrier member is fitted over the member 18, becomes aligned with the through bore 23 in the member 18. A pivot shaft 26 (Fig. 2) passes through the bores 23 and 25 and mounts the carrier member 12 for pivotal movement about a vertical axis on the mounting member. The carrier member 12 also has a locking pin mechanism 27 similar to the mechanism 14 on the bar 8 and including a locking pin 29 movable by operation of a lever 28 of the mechanism from a locking position in which the pin 29 protrudes into the interior of the carrier member and an unlocked position in which the pin is clear of the interior of the carrier member.

As will be understood, when the carrier member is pivotally mounted on the member 18, the pin 29 can be moved into a locking position only if the pin 29 is aligned with the through bore 24 in the member 18. That alignment occurs when the carrier member and member 18 are oriented as shown in Figs. 4A and 5A. If the pin 29 is retracted by operation of the lever 28, it then becomes possible to pivot the carrier member in an anticlockwise direction (as seen in Figs. 2 and 5A) through an angle, which in this particular example is 9.3°, to a position in which an end face of the carrier member 12 abuts an end face of the bar 8; this position of the carrier member is shown in Fig. 2.

As can be seen from Fig. 2, the leaf spring 19 extends through the interior of the carrier member 12 and the distal tip of the spring is adjacent to the interior side wall of the carrier member in the position shown in Fig. 2. As the carrier member 12 is pivoted from that position, however, to one in which the locking pin 29 is engageable in the bore 24, the carrier member bears against the spring 19 and bends it. Thus the carrier member is resiliently biased away from the position where the locking pin 29 is aligned with the bore 24, towards the position shown in Fig. 2.

The operation of the locking device will now be described, principally with reference to Fig. 2, starting from a situation in which the locking device is in the position shown in Fig. 2 with a container being loaded onto the trailer chassis. The container 3 is placed on the chassis with the bottom of the front end of the container immediately adjacent to the bar 8, as previously described for the known arrangement of Figs. 1B and 1C. The container 3 is a 45 foot (13716 mm) container and has corner fittings 4B of an unconventional kind: as seen in Fig. 2, the corner fitting 4B has a front end face which has an inner portion 41 aligned with the front face of the container and an inclined outer portion 42. A corner fitting of this kind is described in further detail in International Patent Application No. PCT/GB97/03070. By providing the inclined face portion 42 the dimensions of the container when measured to a corner extremity are reduced. The corner fitting 4B is hollow and has an opening 43 in its face portion 41.

Once the container 3 is correctly positioned on the trailer chassis, the carrier member 12 is pivoted manually clockwise (as seen in Fig. 2) against the resilient bias of the leaf spring 19 so that the securing pin 13 enters the opening 43 in the corner fitting 4B of the container 3. When the carrier member has been pivoted so far that the pin 13 is fully inserted into the opening 43, the locking pin 29 becomes aligned with the bore 24 and the user can operate the lever 28 to cause the locking pin to enter the bore 24, thereby locking the carrier member in the position in which the pin 13 fully engages the corner fitting 4B. As can be seen from Fig. 2, when viewed in a direction transverse to the longitudinal axis of the locking device and transverse to the longitudinal axis of the pin 29 (i.e. when viewed in the direction of Fig. 2) the distal end of the carrier member is thin, when measured along the longitudinal axis of the pin; therefore, the locking device is positioned substantially entirely inside a vertical plane containing the inclined face portion 42. That is of significance in ensuring that the combination of the container and the locking device complies with European regulations. Such regulations require that no part of the locking device (or any other part of the front end of the trailer) extends more than 2040 mm from the vertical axis of pivoting, that axis being the longitudinal axis of the kingpin 6.

To release the securing pin 13 from the corner fitting, a user simply operates the lever 28 to retract the locking pin 29. The carrier member is then free to pivot back, under the bias of the leaf spring 19, to the position shown in Fig. 2, in which the container is no longer secured and can be lifted off the trailer.

Not all containers will have corner fittings of the special kind shown in Fig. 2. In the case of a container with conventional corner fittings arranged in accordance with international standards, the opening in the front end face of the corner fitting is situated 84 mm further out from the centre of the container. In order to secure a container of that kind with the locking device, it is simply necessary for a user to operate the lever 15 of the locking pin mechanism 14 in order to retract the pin 16 and enable the mounting member 11 to be moved 84 mm outwardly of the bar 8, at which stage the lever 15 is again operated to insert the pin 16 into the other opening in the member 17. The carrier member 12 and securing pin 13 are then each positioned 84 mm further out than shown in Fig. 2 and are in the correct position for securing a standard container having standard corner fittings.

It will of course be understood that whilst in the description of operation reference has been made to only one of the carrier members and locking pins, the same actions are taken in respect of the other carrier member and locking pin at the opposite end of the bar 8.

## Claims

1. A chassis of a trailer, including a kingpin (6) and a locking device for locking a 45 foot (13716mm) container (3) to the chassis, the locking device being disposed at the front end of the chassis and including a pin (13) for engaging in an opening (43) in a front face of a corner fitting (4B) of the container and a locking member (29) for locking the device in a locked position with the pin (13) engaging in the opening (43) in the front face of the corner fitting (4B), **characterised in that** the locking device further comprises a mounting member (11) and a carrier member (12), the pin (13) is mounted on the carrier member (12) and the carrier member (12) is mounted on the mounting member (11), the carrier member (12) being movable between a first position in which the pin (13) engages in the opening (43) of the corner fitting (4B) and a second position in which the pin (13) is clear of the corner fitting (4B), **in that** the locking member (29) is slidably mounted on the carrier member for movement between a first position in which the carrier member (12) is free to move relative to the mounting member (11) and a second position in which the locking member (29) engages in an aperture (24) in the mounting member (11) and the carrier member (12) is locked in a fixed position, which is its first position, relative to the mounting member (11), **in that** the locking device is of generally elongate shape and the pin (13) is disposed at one end of the device extending generally transverse to the longitudinal axis of the device when the carrier member (12) is in the first position, and **in that** when the carrier member (12) is in the first position, the locking device is disposed substantially entirely inside an arcuate surface extending around the vertical axis of pivoting of the kingpin (6) at a radius of 2040mm from the axis.

2. A chassis according to claim 1, in which the carrier member (12) and pin (13) are pivotally movable about a vertical axis between the first position and the second position.

3. A chassis according to claim 1 or 2, in which the carrier member (12) is resiliently biased away from the first position towards the second position.

4. A chassis according to claim 3, in which the resilient bias is provided by a leaf spring (19).

5. A chassis according to any preceding claim, in which, when viewed in a direction transverse to the longitudinal axis of the locking device and transverse to the longitudinal axis of the pin, the locking device is thin, when measured in a direction along the longitudinal axis of the pin, at said one end.

6. A chassis according to any preceding claim, further including a bar (8) arranged to extend transverse to the chassis, a respective carrier member (12) and pin (13) being provided at each of the opposite ends of the bar (8) for engaging in respective openings (43) of corner fittings (4B) at opposite sides of a container (3).

7. A chassis according to claim 6, in which the carrier member (12) is mounted directly on the bar (8).

8. A chassis according to claim 7, in which the carrier member (12) is movably mounted on a mounting member (11) which is in turn secured to the bar (8).

9. A chassis according to any of claims 6 to 8, in which the carrier member (12) is arranged on the bar (8) such that it can be positioned on the chassis in a laterally inner position or in a laterally outer position.

10. A chassis according to claim 9, in which the mounting member (11) is arranged to be fixed to the bar (8) in a laterally inner position or in a laterally outer position.

11. A chassis according to any preceding claim, further including a container (3) mounted on the chassis, the container (3) including a corner fitting (4B) at a front bottom corner, the corner fitting (4B) including an opening (43) in an end face engaged by the locking pin (13) when the carrier member (12) is in the first position.

## Patentansprüche

1. Fahrgestell eines Sattelaufliegers, das einen Zugsattelzapfen (6) und eine Verriegelungsvorrichtung zum Verriegeln eines 45-Fuß-Containers (13716 mm-Container) (3) an dem Fahrgestell umfasst, wobei die Verriegelungsvorrichtung am vorderen Ende des Fahrgestells angeordnet ist und einen Zapfen (13), um mit einer Öffnung (43) in einer Vorderseite eines Eckbeschlags (4B) des Containers in Eingriff zu gelangen, und ein Verriegelungselement (29), um die Vorrichtung in einer verriegelten Position, in der der Zapfen (13) in der Öffnung (43) in der Vorderseite des Eckbeschlags (4B) in Eingriff ist, zu verriegeln, umfasst, **dadurch gekennzeichnet, dass** die Verriegelungsvorrichtung ferner ein Anbringungselement (11) und ein Trägerelement (12) umfasst, wobei der Zapfen (13) an dem Trägerelement (12) angebracht ist und das Trägerelement (12) an dem Anbringungselement (11) angebracht ist, wobei das Trägerelement (12) zwischen einer ersten Position, in der der Zapfen (13) in der Öffnung (43) des Eckbeschlags (4B) in Eingriff ist, und einer zweiten Position, in der sich der Zapfen (13) nicht in dem Eckbeschlag (4B) befindet, beweglich ist, dass das Verriegelungselement (29) an dem Trägerelement gleitend angebracht ist, um sich zwischen einer ersten Position, in der sich das Trägerelement (12) relativ zu dem Anbringungselement (11) frei bewegen kann, und einer zweiten Position, in der das Verriegelungselement (29) in einer Öffnung (24) in dem Anbringungselement (11) in Eingriff ist und das Trägerelement (12) in einer festen Position, die seine erste Position ist, relativ zu dem Anbringungselement (11) verriegelt ist, zu bewegen, dass die Verriegelurigsvorrichtung eine im Allgemeinen lang gestreckte Form hat und der Zapfen (13) an einem Ende der Vorrichtung angeordnet ist und sich im Allgemeinen quer zu der Längsachse der Vorrichtung erstreckt, wenn das Trägerelement (12) in der ersten Position ist, und dass die Verriegelungsvorrichtung dann, wenn das Trägerelement (12) in der ersten Position ist, im Wesentlichen vollständig innerhalb einer gekrümmten Oberfläche angeordnet ist, die sich um die vertikale Achse der Schwenkung des Zugsattelzapfens (6) in einem Radius von 2040 mm von der Achse erstreckt.

2. Fahrgestell nach Anspruch 1, wobei das Trägerelement (12) und der Zapfen (13) zwischen der ersten Position und der zweiten Position um eine vertikale Achse schwenkbar beweglich sind.

3. Fahrgestell nach Anspruch 1 oder 2, wobei das Trägerelement (12) aus der ersten Position in die zweite Position elastisch vorbelastet ist.

4. Fahrgestell nach Anspruch 3, wobei die elastische Vorbelastung durch eine Blattfeder (19) geschaffen wird.

5. Fahrgestell nach einem vorhergehenden Anspruch, wobei bei Betrachtung in einer Richtung quer zu der Längsachse der Verriegelungsvorrichtung und quer zu der Längsachse des Zapfens die Verriegelungsvorrichtung an dem einen Ende dünn ist, wenn in einer Richtung längs der Längsachse des Zapfens gemessen wird.

6. Fahrgestell nach einem vorhergehenden Anspruch, das ferner einen Stab (8) umfasst, der dazu vorgesehen ist, sich quer zu dem Fahrgestell zu erstrecken, wobei ein entsprechendes Trägerelement (12) und ein entsprechender Zapfen (13) an jedem der gegenüberliegenden Enden des Stabs (8) vorgesehen sind, um in entsprechenden Öffnungen (43) der Eckbeschläge (4B) an gegenüberliegenden Seiten eines Containers (3) in Eingriff zu gelangen.

7. Fahrgestell nach Anspruch 6, wobei das Trägerelement (12) direkt an dem Stab (8) angebracht ist.

8. Fahrgestell nach Anspruch 7, wobei das Trägerelement (12) an einem Anbringungselement (11) beweglich angebracht ist, das seinerseits an dem Stab (8) befestigt ist.

9. Fahrgestell nach einem der Ansprüche 6 bis 8, wobei das Trägerelement (12) an dem Stab (8) in der Weise angeordnet ist, dass es an dem Fahrgestell an einer seitlich inneren Position oder an einer seitlich äußeren Position positioniert werden kann.

10. Fahrgestell nach Anspruch 9, wobei das Anbringungselement (11) dazu ausgelegt ist, an dem Stab (8) an einer seitlich inneren Position oder an einer seitlich äußeren Position befestigt zu werden.

11. Fahrgestell nach einem vorhergehenden Anspruch, das ferner einen Container (3) umfasst, der an dem Fahrgestell angebracht ist, wobei der Container (3) an einer vorderen unteren Ecke einen Eckbeschlag (4B) aufweist, der in einer Stirnfläche eine Öffnung (43) aufweist, mit der der Verriegelungsstift (13) in Eingriff ist, wenn das Trägerelement (12) in der ersten Position ist.

## Revendications

1. Châssis de remorque, incluant un pivot d'attelage (6) et un dispositif de verrouillage permettant de verrouiller un conteneur (3) de 45 pieds (13716 mm) au châssis, le dispositif de verrouillage étant disposé à l'extrémité avant du châssis et incluant un ergot (13) destiné à s'engager dans une ouverture (43) pratiquée dans une face avant d'une pièce de coin (4B) du conteneur et un élément de verrouillage (29) destiné à verrouiller le dispositif dans une position de verrouillage dans laquelle l'ergot (13) s'engage dans l'ouverture (43) pratiquée dans la face avant d'une pièce de coin (4B), **caractérisé en ce que** le dispositif de verrouillage comprend en outre un élément de montage (11) et un élément de support (12), l'ergot (13) est monté sur l'élément de support (12) et l'élément de support (12) est monté sur l'élément de montage (11), l'élément de support (12) étant mobile entre une première position dans laquelle l'ergot (13) s'engage dans l'ouverture (43) pratiquée dans la pièce de coin (4B) et une deuxième position dans laquelle l'ergot (13) est libéré de la pièce de coin (4B), **en ce que** l'élément de verrouillage (29) est monté de manière coulissante sur l'élément de support de manière à se déplacer entre une première position dans laquelle l'élément de support (12) est libre de se déplacer par rapport à l'élément de montage (11) et une deuxième position dans laquelle l'élément de verrouillage (29) s'engage dans une ouverture (24) pratiquée dans l'élément de montage (11) et l'élément de support (12) est verrouillé dans une position fixe, qui est sa première position, par rapport à l'élément de montage (11), **en ce que** le dispositif de verrouillage est généralement de forme allongée et l'ergot (13) est disposé à une extrémité du dispositif s'étendant généralement transversalement à l'axe longitudinal du dispositif lorsque l'élément de support (12) est dans la première position, et **en ce que** lorsque l'élément de support (12) est dans la première position, le dispositif de verrouillage est disposé en étant sensiblement entièrement à l'intérieur d'une surface qui forme un arc autour de l'axe vertical de pivotement du pivot d'attelage (6) et qui est distante de l'axe suivant un rayon de 2040 mm.

2. Châssis selon la revendication 1, dans lequel l'élément de support (12) et l'ergot (13) sont mobiles en pivotant autour d'un axe vertical entre la première position et la deuxième position.

3. Châssis selon la revendication 1 ou 2, dans lequel l'élément de support (12) est soumis à une charge résiliente qui l'écarte de la première position vers la deuxième position.

4. Châssis selon la revendication 3, dans lequel la charge résiliente est fournie par un ressort à lames (19).

5. Châssis selon l'une quelconque des revendications précédentes, dans lequel, lorsqu'on le voit dans une direction transversale à l'axe longitudinal du dispositif de verrouillage et transversale à l'axe longitudinal de l'ergot, le dispositif de verrouillage est mince, lorsqu'on le mesure dans une direction qui suit l'axe longitudinal de l'ergot, au niveau de ladite une extrémité.

6. Châssis selon l'une quelconque des revendications précédentes, incluant en outre une barre (8) disposée en s'étendant transversalement au châssis, un élément de support (12) et un ergot (13) étant respectivement disposés sur chacune des extrémités opposées de la barre (8) pour s'engager dans les ouvertures respectives (43) des pièces de coin (4B) sur les côtés opposés d'un conteneur (3).

7. Châssis selon la revendication 6, dans lequel l'élément de support (12) est monté directement sur la barre (8).

8. Châssis selon la revendication 7, dans lequel l'élément de support (12) est monté de manière mobile sur un élément de montage (11) qui est lui-même fixé à la barre (8).

9. Châssis selon l'une quelconque des revendications 6 à 8, dans lequel l'élément de support (12) est agencé sur la barre (8) de manière à ce qu'il puisse être positionné sur le châssis dans une position latéralement intérieure ou dans une position latéralement extérieure.

10. Châssis selon la revendication 9, dans lequel l'élément de montage (11) est agencé pour être fixé à la barre (8) dans une position latéralement intérieure ou dans une position latéralement extérieure.

11. Châssis selon l'une quelconque des revendications précédentes, incluant en outre un conteneur (3) monté sur le châssis, le conteneur (3) incluant une pièce de coin (4B) sur un coin inférieur avant, la pièce de coin (4B) incluant une ouverture (43) pratiquée dans une face avant et engagée par l'ergot de verrouillage (13) lorsque l'élément de support (12) est dans la première position.
